(19) Europäisches Patentamt
European Patent Office
Office européen des brevets

(11) **EP 3 008 099 B1**

(12) **EUROPEAN PATENT SPECIFICATION**

(45) Date of publication and mention
of the grant of the patent:
**17.05.2017 Bulletin 2017/20**

(51) Int Cl.:
***C08F 214/18*** *(2006.01)*    ***C08K 5/14*** *(2006.01)*
***C08L 27/12*** *(2006.01)*

(21) Application number: **14735074.8**

(22) Date of filing: **10.06.2014**

(86) International application number:
**PCT/US2014/041652**

(87) International publication number:
**WO 2014/200973 (18.12.2014 Gazette 2014/51)**

(54) **FLUOROPOLYMERS COMPRISING MONOMERIC UNITS DERIVED FROM A VINYL PERFLUOROALKYL OR VINYL PERFLUOROALKYLENOXIDE PERFLUOROVINYL ETHER**

FLUORIERTE COPOLYMERISATE MIT EINPOLYMERISIERTEN EINHEITEN EINES VINYLPERFLUOROALKYL- ODER VINYLPERFLUOROALKYLENOXYPERFLUORO-VINYLETHERS

POLYMÈRES FLUORÉS CONTENANT DES RÉSIDUS COPOLYMÉRISÉS D'UN MONOMÈRE VINYLE PERFLUOROALKYLE OU VINYLE PERFLUOROALKYLÈNEOXY PERFLUOROVINYLE ÉTHER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2013 US 201361834940 P**

(43) Date of publication of application:
**20.04.2016 Bulletin 2016/16**

(73) Proprietor: **3M Innovative Properties Company**
**St. Paul, MN 55133-3427 (US)**

(72) Inventors:
• **GROOTAERT, Werner, M., A.**
**Saint Paul, MN 55133-3427 (US)**
• **GUERRA, Miguel, A.**
**Saint Paul, MN 55133-3427 (US)**

(74) Representative: **Herzog, Fiesser & Partner**
**Patentanwälte PartG mbB**
**Isartorplatz 1**
**80331 München (DE)**

(56) References cited:
**EP-A1- 1 978 380      JP-A- 2002 303 982**
**US-A- 5 449 825       US-A1- 2007 208 137**

EP 3 008 099 B1

**Description**

**TECHNICAL FIELD**

A fluoropolymer comprising monomeric units derived from a hydrocarbon olefin-containing perfluoro vinyl ether is described.

**BACKGROUND**

In fluoropolymer polymerizations, initiators, such as APS (ammonium persulfate) are added to initiate the polymerization. These initiators easily generate radicals when exposed to heat, light, etc., which then react with the monomers to form a radical chain, which can then react with additional monomers, etc. growing into a polymer chain. Generally, adding more initiator decreases the polymerization time (since more radicals are generated). In many cases, iodinated perfluorinated chain transfer agents are used in order to establish, what is referred to in the art, as a "pseudo living polymerization", in which iodine atoms are transferred to the polymer chain ends. In the case of using APS as an initiator, low amounts of APS are desirable since the sulfate ion terminates the radical chain, leading to smaller molecular weight polymer chains, and/or chains which are not terminated by the reactive iodine atoms. When lowering the APS amount, this typically leads to increased polymerization times, especially when the polymerization is conducted in the presence of iodine-containing chain transfer agent. Thus, a balance occurs between minimizing polymerization time and generating acceptable molecular weight polymers with high solid content.

Regarding performance, additives are often added to fluoropolymer gums to improve the fluoropolymer's properties. For example, acid acceptors, which include inorganic bases such as a metal oxide or metal hydroxide may be added to bind any HF or other acids that might be generated when using the fluoropolymers at high temperatures. Exemplary acid acceptors include calcium hydroxide, magnesium oxide, lead oxide, zinc oxide and calcium oxide. However, the presence of these acid acceptors can be detrimental to the fluoropolymer as well. For example, the presence of the metal oxide or metal hydroxide can cause water swelling of the fluoropolymer. Further, some applications require the absence of extractable metallic compounds (such as in semiconductor applications) and thus, the presence of metal-containing acid acceptors is not desirable.

**SUMMARY**

There is a desire to improve the manufacture of fluoropolymers, by decreasing polymerization times and/or cost. There is also a desire to improve the resulting properties of the fluoropolymers, for example, by making fluoropolymers that have improved compression set resistance and/or by eliminating the use of acid acceptors in a fluoroelastomer gum and/or cured fluoroelastomer gum, while not sacrificing performance.

In one aspect, a composition comprising a fluoropolymer is described, wherein the fluoropolymer is derived from the polymerization of a polymerizable fluorinated olefinic monomer and a hydrocarbon olefin-containing perfluoro vinyl ether monomer selected from $CF_2=CFO -R_f-CH=CH_2$, wherein $R_f$ is a perfluorinated group with the proviso that the $R_f$ group does not comprise 2 or 3 catenated atoms between the oxygen atom of the vinyl ether group and the vinyl group.

In one aspect, a curable composition is described comprising a curing agent and a fluoropolymer derived from the polymerization of a polymerizable fluorinated olefinic monomer and a hydrocarbon olefin-containing perfluoro vinyl ether monomer selected from $CF_2=CFO-R_f-CH=CH_2$, wherein $R_f$ is a perfluorinated group with the proviso that the $R_f$ group does not comprise 2 or 3 catenated atoms between the oxygen atom vinyl ether group and the vinyl group.

In yet another aspect, a method of making a fluoropolymer is described comprising providing a polymerizable fluorinated olefinic monomer and a perfluoroalkyl vinyl ether monomer selected from $CF_2=CFO-R_f-CH=CH_2$, wherein $R_f$ is a perfluorinated group with the proviso that the $R_f$ group does not comprise 2 or 3 catenated atoms between the oxygen atom vinyl ether group and the vinyl group, and polymerizing the monomers in the presence of an initiator.

The above summary is not intended to describe each embodiment. The details of one or more embodiments of the invention are also set forth in the description below. Other features, objects, and advantages will be apparent from the description and from the claims.

**DETAILED DESCRIPTION**

As used herein, the term
"a", "an", and "the" are used interchangeably and mean one or more; and
"and/or" is used to indicate one or both stated cases may occur, for example A and/or B includes, (A and B) and (A or B);
"backbone" refers to the main continuous chain of the polymer;

"catenated" refers to being linked in a series, e.g., a catenated oxygen atom refers to an ether oxygen;

"crosslinking" refers to connecting two pre-formed polymer chains using chemical bonds or chemical groups;

"cure site" refers to functional groups, which may participate in crosslinking;

"interpolymerized" refers to monomers that are polymerized together to form a polymer backbone;

"monomer" is a molecule which can undergo polymerization which then form part of the essential structure of a polymer; and

"polymer" refers to a macrostructure having a number average molecular weight (Mn) of at least 50,000 dalton, at least 100,000 dalton, at least 300,000 dalton, at least 500,000 dalton, at least, 750,000 dalton, at least 1,000,000 dalton, or even at least 1,500,000 dalton.

Also herein, recitation of "at least one" includes all numbers of one and greater

The present disclosure is directed toward polymerizations of fluoropolymers, wherein a hydrocarbon olefin-containing perfluoro vinyl ether monomer of the formula $CF_2=CFO-R_f-CH=CH_2$, wherein $R_f$ is a perfluorinated group, is used during the polymerization. As will be discussed below, the polymerization of a hydrocarbon olefin-containing perfluoro vinyl ether monomer and a polymerizable olefinic monomer, in some embodiments, can be polymerized in a short time frame with high solids. In some embodiments, the gum resulting from the polymerization of a hydrocarbon olefin-containing perfluoro vinyl ether monomer and a polymerizable olefinic monomer, does not require an acid acceptor and/or can yield a polymer having improved characteristics, such as for example, compression set.

The hydrocarbon olefin-containing perfluoro vinyl ether monomer of the present disclosure has the formula $CF_2=CFO-R_f-CH=CH_2$, wherein $R_f$ is a perfluorinated group. The hydrocarbon olefin-containing perfluoro vinyl ether monomer comprises a terminal olefinic hydrocarbon group ($-CH=CH_2$) and an opposing perfluorinated vinyl ether group ($CF_2=CFO-$). The hydrocarbon olefin-containing perfluoro vinyl ether monomer should not be of a structure to enable cyclization of the monomer during the polymerization process as disclosed in U.S. Pat. No. 4,910,276, Nakamura et al. In other words, the fluoropolymers of the present disclosure are essentially free of cyclic structures (those comprising 5-7 membered rings) in the main polymer chain, wherein essentially free means less than 5%, less than 2%, less than 1% or even less than 0.5% occurring in the main polymer chain. Therefore, $R_f$ in the formula $CF_2=CFO-R_f-CH=CH_2$ should not comprise 2 or 3 catenated atoms between the oxygen of the vinyl ether group and the opposing vinyl group (in other words, $R_f$ should not comprise -C-C- or -C-C-C-).

In one embodiment, $R_f$ is substituted, unsubstituted, saturated, linear, or branched, optionally comprising catenated oxygen atoms. In one embodiment, $R_f$ is selected from a $-CF_2-$, or a perfluorinated alkylene radical comprising 4, 5, 6, 7, 8, 9, 10, 11, 12, 13, 14, 15, 16, 17, 18, 19, or even 20 carbon atoms. In one embodiment, $R_f$ comprises at least 1 ether linkage (i.e., -C-O-C-).

Exemplary hydrocarbon olefin-containing perfluoro vinyl ether monomers include: $CF_2=CFOC_4F_8CH=CH_2$, $CF_2=CFOC_5F_{10}CH=CH_2$, $CF_2=CFOCF_2CF(CF_3)OC_2F_4CH=CH_2$, $CF_2=CFOCF_2CF(CF_3)OC_4F_8CH=CH_2$, and combination thereof.

Preferably, the hydrocarbon olefin-containing perfluoro vinyl ether monomers are present in low amounts, for example in lower amounts than the polymerizable olefinic monomers and/or comonomers described below. In one embodiment, the hydrocarbon olefin-containing perfluoro vinyl ether monomers are present in amounts greater than 0 and up to 1.0 % or even up to 2% by moles based on the total moles of monomer used in the fluoropolymer. In one embodiment, the hydrocarbon olefin-containing perfluoro vinyl ether monomers are present in amounts of at least 0.01, 0.02, or even 0.03 mole % and at most 0.05, 0.08, 0.1, 0.12, 0.14, or even 0.2 mole % based on the total moles of monomer used in the fluoropolymer. The preferred amount is 0.01 to 0.1 mole % of the total moles of monomer used.

The hydrocarbon olefin-containing perfluoro vinyl ether monomers of the present disclosure are polymerized with a polymerizable fluorinated olefinic monomer to yield the fluoropolymers disclosed herein, wherein the polymerizable fluorinated olefinic monomer is different than the hydrocarbon olefin-containing perfluoro vinyl ether monomer.

The polymerizable fluorinated olefinic monomers are not particularly limited so long as they have radical polymerizability. These polymerizable fluorinated olefinic monomers may be perfluorinated or partially fluorinated monomers. Such olefins, typically contain from 2 to 20 carbon atoms. In addition to fluorine atoms and, as the case may be, hydrogen atoms, the olefins may also contain Cl atoms and/or oxygen ether atoms.

Exemplary polymerizable fluorinated olefinic monomers include: tetrafluoroethylene (TFE), hexafluoropropylene (HFP), vinylidene fluoride (VDF), chlorotrifluoroethylene (CTFE), vinyl fluoride, 2-chloropentafluoropropene, and $CH_2=C(R)-Z-CR=CH_2$, where R is independently selected from H or a C1-C6 alkyl and Z is a linear or branched C1-C18 fluorinated radical, optionally containing catenated oxygen atoms; and combinations thereof.

Other exemplary polymerizable fluorinated olefinic monomers include fluorinated and perfluorinated vinyl ethers and allyl ethers, which may be alkyl ethers alkoxy ethers or polyoxy alkyl ethers. Such ethers typically have a general structure according to the formula $Rf-O-(CF_2)_n-CF=CF_2$ wherein n is 1 or 0 and Rf represents an alkyl residue which may or may not be interrupted by one or more than one oxygen atoms. Examples of such ethers include but are not limited to, perfluorinated vinyl ethers (PVE), such as perfluoro (methyl vinyl) ether (PMVE), perfluoro (ethyl vinyl) ether (PEVE), perfluoro (n-propyl vinyl) ether (PPVE-1), perfluoro-2-propoxypropylvinyl ether (PPVE-2), perfluoro-3-methoxy-n-propylvinyl ether, perfluoro-2-methoxy-ethylvinyl ether and $CF_3-(CF_2)_2-O-CF(CF_3)-CF_2-O-CF(CF_3)-CF_2-O-CF=CF_2$.

In addition to these polymerizable fluorinated olefinic monomers, the fluoropolymers may contain units derived from non-fluorinated olefinic monomers. Such non-fluorinated olefinic monomers, typically contain from 2 to 20 carbon atoms and may also contain Cl atoms and/or oxygen ether atoms. Exemplary non-fluorinated olefinic monomers include propylene (P) and ethylene (E), vinyl chloride, vinylidene chloride, and combinations thereof.

Exemplary combinations of monomers polymerized together include: TFE/1,1,-difluoroethylene/hydrocarbon olefin-containing perfluoro vinyl ether; VDF/HFP/ hydrocarbon olefin-containing perfluoro vinyl ether; or TFE/VDF/HFP/ hydrocarbon olefin-containing perfluoro vinyl ether.

Although not wanting to be limited by theory, it is believed that the hydrocarbon olefin-containing perfluoro vinyl ether monomer disclosed herein introduces points of branching along the polymer chain. This is advantageous, because it changes the polymer architecture, allowing more than two endgroups per polymer chain.

When discussing cross-linking of fluoropolymers, bromine or iodine atoms are incorporated into the polymer chain during polymerization to allow for subsequent points for cross-linking. These halogens are typically incorporated using an iodinated and/or brominated-chain transfer agent or a bromine and/or iodine-containing cure site monomer.

Chain transfer agents are compounds capable of reacting with the propagating polymer chain and terminating the chain propagation. A chain transfer agent is typically added to control the molecular weight of the fluoropolymer. Because the hydrocarbon olefin-containing perfluoro vinyl ether monomer disclosed herein introduce points of branching along the polymer chain, by polymerizing in the presence of a iodine (or bromine)-containing chain transfer agent, it is believed that more than 2, more than 4, more than 10, more than 20 or even more than 50 iodine (or bromine) atoms can be incorporated per polymer chain. These halogens (iodine or bromine) can then be subsequently used to cross-link the fluoropolymer in a curing reaction, resulting in a more stable cross linked network.

Cure site monomers are typically added to incorporate cure site points along the polymer chain, because the hydrocarbon olefin-containing perfluoro vinyl ether monomer disclosed herein are thought to introduce points of branching along the polymer chain, if a iodine or bromine-containing chain transfer agent is used, in one embodiment, a cure site monomer may not be necessary even when manufacturing fluoroelastomeric compositions. However, in other embodiments, it may be desirable to include cure site monomers to increase the amount of cure sites even further in the fluoropolymer.

In one embodiment, the fluoropolymers provided herein may further comprise at least one cure site. Suitable cure sites are halogen atoms capable of participating in a peroxide cure reaction. The halogen capable of participating in a peroxide cure reaction can be bromine or iodine. Preferably the halogen is iodine. The halogen atom capable of participating in the peroxide cure reaction is located at a terminal position of the backbone chain. However, further reactive cure sites may also be present. Typically, the amount of iodine, bromine or the combination thereof contained in the fluoropolymer is between 0.001 and 5%, preferably between 0.01 and 2.5%, or 0.1 to 1% or 0.2 to 0.6% by weight with respect to the total weight of the fluoropolymer.

Exemplary cure site monomers include: $CF_2=CHBr$, $CH_2=CHCH_2Br$, $CF_2=CFCF_2Br$, $CH_2=CHCF_2CF_2Br$, $CF_2=CHI$, $CH_2=CHCH_2I$, $CF_2=CFCF_2I$, $CH_2=CHCF_2CF_2I$, $CF_2=CFOC_4F_8I$ (MV4I), $CF_2=CFOC_2F_4I$, $CF_2=CFOCF_2CF(CF_3)OC_2F_4I$, $CH_2=CHCF_2CF_2I$, $CF_2=CFOCF_2CF_2CH_2I$, $CF_2=CFOCF_2CF_2CH_2CH_2I$, $CF_2=CFOC_4F_8CH_2CH_2I$, and combinations thereof.

The fluoropolymers of the present disclosure can be obtained with any of the known polymerization techniques, however, the fluoropolymers are preferably made through an aqueous emulsion polymerization process, which can be conducted in a known manner including batch, semi-batch, or continuous polymerization techniques. The reactor vessel for use in the aqueous emulsion polymerization process is typically a pressurizable vessel capable of withstanding the internal pressures during the polymerization reaction. Typically, the reaction vessel will include a mechanical agitator, which will produce thorough mixing of the reactor contents and heat exchange system. Any quantity of the monomer(s) may be charged to the reactor vessel. The monomers may be charged batchwise or in a continuous or semicontinuous manner. By semicontinuous is meant that a plurality of batches of the monomer are charged to the vessel during the course of the polymerization. The independent rate at which the monomers are added to the kettle will depend on the consumption rate of the particular monomer with time. Preferably, the rate of addition of monomer will equal the rate of consumption of monomer, i.e. conversion of monomer into polymer.

The reaction kettle is charged with water, the amounts of which are not critical. To the aqueous phase there is generally also added a fluorinated surfactant, typically a non-telogenic fluorinated surfactant although aqueous emulsion polymerization without the addition of fluorinated surfactant may also be practiced. When used, the fluorinated surfactant is typically used in amount of 0.01% by weight to 1% by weight. Suitable fluorinated surfactants include any fluorinated surfactant commonly employed in aqueous emulsion polymerization. In one embodiment, the fluorinated surfactants are those that correspond to the general formula:

$$Y-R_f-Z-M$$

wherein Y represents hydrogen, Cl or F; $R_f$ represents a linear or branched perfluorinated alkylene having 4 to 10 carbon atoms; Z represents $COO^-$ or $SO_3^-$ and M represents an alkali metal ion or an ammonium ion. Exemplary the fluorinated surfactants include: ammonium salts of perfluorinated alkanoic acids, such as perfluorooctanoic acid and perfluorooctane sulphonic acid.

In another embodiment, the fluorinated surfactants are of the general formula:

$$[R_f\text{-O-L-COO}^-]_i X_i^+ \qquad (VI)$$

wherein L represents a linear partially or fully fluorinated alkylene group or an aliphatic hydrocarbon group, $R_f$ represents a linear partially or fully fluorinated aliphatic group or a linear partially or fully fluorinated group interrupted with one or more oxygen atoms, $X_i^+$ represents a cation having the valence i and i is 1,2 and 3. Specific examples are described in, for example, US Pat. Publ. 2007/0015937 (Hintzer et al.). Exemplary emulsifiers include: $CF_3CF_2OCF_2CF_2OCF_2COOH$, $CHF_2(CF_2)_5COOH$, $CF_3(CF_2)_6COOH$, $CF_3O(CF_2)_3OCF(CF_3)COOH$, $CF_3CF_2CH_2OCF_2CH_2OCF_2COOH$, $CF_3O(CF_2)_3OCHFCF_2COOH$, $CF_3O(CF_2)_3OCF_2COOH$, $CF_3(CF_2)_3(CH_2CF_2)_2CF_2CF_2CF_2COOH$, $CF_3(CF_2)_2CH_2(CF_2)_2COOH$, $CF_3(CF_2)_2COOH$, $CF_3(CF_2)_2(OCF(CF_3)CF_2)OCF(CF_3)COOH$, $CF_3(CF_2)_2(OCF_2CF_2)_4OCF(CF_3)COOH$, $CF_3CF_2O(CF_2CF_2O)_3CF_2COOH$, and their salts. In one embodiment, the molecular weight of the surfactant is less than 1500, 1000, or even 500 grams/mole.

These fluorinated surfactants may be used alone or in combination as a mixture of two or more of them. The amount of the surfactant is well below the critical micelle concentration, generally within a range of from 250 to 5,000 ppm (parts per million), preferably 250 to 2000 ppm, more preferably 300 to 1000 ppm, based on the mass of water to be used.

A chain transfer agent may be used to control the molecular weight of the fluoropolymer so as to obtain the desired zero shear rate viscosity and/or to introduce halogens (I or Br) at a terminal position of the polymer chain. Examples of suitable chain transfer agents include those having the formula $R_f P_x$, wherein P is Br or I, preferably I, $R_f$ is an x-valent alkyl radical having from 1 to 12 carbon atoms, which, optionally may also contain chlorine atoms. Typically, x is 1 or 2. Useful chain transfer agents include perfluorinated alkyl monoiodide, perfluorinated alkyl diiodide, perfluorinated alkyl monobromide, perfluorinated alkyl dibromide, and combinations thereof. Specific examples include $CF_2Br_2$, $Br(CF_2)_2Br$, $Br(CF_2)_4Br$, $CF_2ClBr$, $CF_3CFBrCF_2Br$, $I(CF_2)_nI$ wherein n is an integer from 3-10 (e.g., $I(CF_2)_4I$), and combinations thereof.

The polymerization is usually initiated after an initial charge of monomer by adding an initiator or initiator system to the aqueous phase. For example, peroxides can be used as free radical initiators. Specific examples of peroxide initiators include, hydrogen peroxide, diacylperoxides such as diacetylperoxide, dipropionylperoxide, dibutyrylperoxide, dibenzoylperoxide, benzoylacetylperoxide, diglutaric acid peroxide and dilaurylperoxide, and further water soluble peracids and water soluble salts thereof such as e.g. ammonium, sodium or potassium salts. Examples of per-acids include peracetic acid. Esters of the peracid can be used as well and examples thereof include tert-butylperoxyacetate and tert-butylperoxypivalate. A further class of initiators that can be used are water soluble azo-compounds. Suitable redox systems for use as initiators include for example a combination of peroxodisulphate and hydrogen sulphite or disulphite, a combination of thiosulphate and peroxodisulphate or a combination of peroxodisulphate and hydrazine. Further initiators that can be used are ammonium- alkali- or earth alkali salts of persulfates, permanganic or manganic acid or manganic acids. The amount of initiator employed is typically between 0.03 and 2 % by weight, preferably between 0.05 and 10 % by weight based on the total weight of the polymerization mixture. The full amount of initiator may be added at the start of the polymerization or the initiator can be added to the polymerization in a continuous way during the polymerization. One can also add part of the initiator at the start and the remainder in one or separate additional portions during the polymerization. Accelerators such as for example water-soluble salts of iron, copper and silver may preferably also be added.

During the initiation of the polymerization reaction, the sealed reactor kettle and its contents are conveniently pre-heated to the reaction temperature. Polymerization temperatures are from 20°C to 150°C, preferred from 30°C to 110°C and most preferred from 40°C to 100°C. The polymerization pressure is typically between 4 and 30 bar, in particular 8 to 20 bar. The aqueous emulsion polymerization system may further comprise auxiliaries, such as buffers and complex-formers.

The amount of polymer solids that can be obtained at the end of the polymerization is typically between 10% and 45% by weight, preferably between 20% and 40% by weight and the average particle size of the resulting fluoropolymer is typically between 50 nm and 500 nm.

It has been discovered that by using the hydrocarbon olefin-containing perfluoro vinyl ethers disclosed herein, polymerization times can be reduced while still achieving high solids contents. For example, polymerization times of less than 15 hours, less than 10 hours, less than 8 hours, or even less than 4 hours may be used while still generating more than 20%, more than 30%, or even more than 35% solids, using an aqueous emulsion polymerization reaction.

In the present disclosure, the hydrocarbon olefin-containing perfluoro vinyl ethers have two carbon-carbon double bonds, each having different polymerizability. The perfluorinated vinyl ether being much more readily polymerized versus the hydrocarbon olefin.

Although not wanting to be limited by theory, it is believed that the small amounts of hydrocarbon olefin-containing perfluoro vinyl ethers used in the present disclosure cause a partial branching of the fluoropolymer and allow, in the case of peroxide curing, the ability to remarkably increase the amount of terminal iodines and/or bromines per chain as compared to a polymer made without the hydrocarbon olefin-containing perfluoro vinyl ether. Consequently, it is possible to achieve low compression set values as can be seen in the Examples below.

It is believed that the hydrocarbon olefin-containing perfluoro vinyl ethers create a polymer architecture that favorably influences the mechanical properties and/or the curing behavior of the fluoropolymers. This may occur by generating branched polymers, particularly when used in small amounts.

The hydrocarbon olefin-containing perfluoro vinyl ethers as disclosed herein may impart branching of the polymer during polymerization. The level of branching or non-linearity can be characterized through the long chain branching index (LCBI). The LCBI can be determined as described in R. N. Shroff, H. Mavridis; Macromol., 32, 8464-8464 (1999) & 34, 7362-7367 (2001) according to the equation:

$$LCBI = \frac{\eta_{0,br.}^{1/a}}{[\eta]_{br.}} \cdot \frac{1}{k^{1/a}} - 1 \qquad \text{eq. 1}$$

In the above equation, $\eta_{0,br}$ is the zero shear viscosity (units Pa s) of the branched polymer measured at a temperature T and $[\eta]_{br}$ is the intrinsic viscosity (units ml/g) of the branched polymer at a temperature T in a solvent in which the branched polymer can be dissolved and a and k are constants. These constants are determined from the following equation:

$$\eta_{0,lin} = k \cdot [\eta]_{lin.}^{a} \qquad \text{eq. 2}$$

wherein $\eta_{0,lin}$ and $[\eta]_{lin}$ represent respectively the zero shear viscosity and intrinsic viscosity of the corresponding linear polymer measured at the respective same temperatures T and T' and in the same solvent. Thus, the LCBI is independent of the selection of the measurement temperatures and solvent chosen provided of course that the same solvent and temperatures are used in equations 1 and 2. The zero shear viscosity and intrinsic viscosity are typically determined on freeze coagulated polymers.

The values a and k along with the test conditions for some fluoropolymers are listed in the following table:

| Polymer | test condition | a-value | k-value |
|---|---|---|---|
| TFE$_{39}$IHFP$_{11}$/VDF$_{50}$ | A | 5.8 | 2.4 10$^{-8}$ |
| TFE$_{24.5}$/HFP$_{23}$/VDF$_{52.5}$ | A | 5.8 | 5.5 10$^{-8}$ |
| VDF$_{78}$/HFP$_{22}$ | A | 5.8 | 1.5 10$^{-8}$ |
| polyvinylidene fluoride | B | 5.8 | 1.2 10$^{-8}$ |
| polyvinylidene fluoride | C | 5.8 | 2.2 10$^{-8}$ |

In the above table, the indexes to the monomer units in the polymer indicate the amount of the respective unit in mole% and the test conditions are as follows:

A: shear viscosity at 265°C and the intrinsic viscosity in methyl ethyl ketone at 35°C
B: shear viscosity at 230°C and the intrinsic viscosity in dimethylformamide at 23°C
C: shear viscosity at 230°C and the intrinsic viscosity in dimethylformamide at 110°C.

It can be observed from the above table that the constant a-values appear to be independent of the polymer tested whereas the k-value varies with composition of the polymer and test condition used.

The LCBI of the fluoropolymer used should have a value of at least 0.2. However, when the level of branching (and thus the LCBI value) becomes too large, the polymer may have a gel fraction that cannot be dissolved in an organic solvent. One skilled in the art through routine experimentation may readily determine the appropriate value of LCBI.

Generally, the LCBI will be between 0.2 and 5, preferably between 0.5 and 1.5. In one embodiment, the LCBI is greater than 0.2, 0.5, 1, 1.5, 2, 2.5, 4, or even 6.

In one embodiment of the present disclosure, the compositions of the present disclosure comprise a higher LCBI value, than the same polymer prepared with an alternate branching agent, such as a halogenated olefin.

In one embodiment, the fluoropolymers of the present disclosure are perfluorinated. In other words, all of the C-H bonds in the polymer backbone are replaced by C-F bonds, although the end groups may or may not be fluorinated. In one embodiment, the fluoropolymers of the present disclosure are highly fluorinated, meaning that 80%, 90%, 95%, or even 99% of the C-H bonds in the polymer backbone are replaced by C-F bonds. In another embodiment, the fluoropolymers of the present disclosure are partially fluorinated, meaning the polymer backbone (excluding the end groups) comprises a least one C-H bond and one C-F bond.

The fluoropolymers described above may be used to make fluoroelastomer compositions. The fluoroelastomer compositions contain curable fluoroelastomers and one or more peroxide cure systems. The peroxide cure systems typically include an organic peroxide. The peroxide will cause curing of the fluorinated polymer to form a cross-linked (cured) fluoroelastomer when activated. Suitable organic peroxides are those which generate free radicals at curing temperatures. A dialkyl peroxide or a bis(dialkyl peroxide) which decomposes at a temperature above 50°C is especially preferred. In many cases it is preferred to use a di-tertiarybutyl peroxide having a tertiary carbon atom attached to the peroxy oxygen. Among the most useful peroxides of this type are 2,5-dimethyl-2,5-di(tertiarybutylperoxy)hexyne-3 and 2,5-dimethyl-2,5-di(tertiarybutylperoxy)hexane. Other peroxides can be selected from compounds such as but not limited to dicumyl peroxide, dibenzoyl peroxide, tertiarybutyl perbenzoate, alpha,alpha'-bis(t-butylperoxy-diisopropylbenzene), and di[1,3-dimethyl-3-(t-butylperoxy)-butyl]carbonate. Generally, about 1 to 5 parts of peroxide per 100 parts of fluoropolymer may be used.

The curing agents may be present on carriers, for example silica containing carriers.

A peroxide cure system may also include one or more coagent. Typically, the coagent includes a polyunsaturated compound which is capable of cooperating with the peroxide to provide a useful cure. These coagents can be added in an amount between 0.1 and 10 parts per hundred parts fluoropolymer, preferably between 2 and 5 parts per hundred parts fluoropolymer. Examples of useful coagents include triallyl cyanurate; triallyl isocyanurate; triallyl trimellitate; tri(methylallyl)isocyanurate; tris(diallylamine)-s-triazine; triallyl phosphite; N,N-diallyl acrylamide; hexaallyl phosphoramide; N,N,N',N'-tetraalkyl tetraphthalamide; N,N,N',N'-tetraallyl inalonamide; trivinyl isocyanurate; 2,4,6-trivinyl methyltrisiloxane; N,N'-m-phenylenebismaleimide; diallyl-phthalate and tri(5-norbornene-2-methylene)cyanurate. Particularly useful is triallyl isocyanurate.

The curable fluoroelastomer composition may further contain acid acceptors. Acid acceptors may be added to improve the fluoroelastomers steam and water resistance. Such acid acceptors can be inorganic or blends of inorganic and organic acid acceptors. Examples of inorganic acceptors include magnesium oxide, lead oxide, calcium oxide, calcium hydroxide, dibasic lead phosphate, zinc oxide, barium carbonate, strontium hydroxide, calcium carbonate, hydrotalcite, etc. Organic acceptors include epoxies, sodium stearate, and magnesium oxalate. Particularly suitable acid acceptors include magnesium oxide and zinc oxide. Blends of acid acceptors may be used as well. The amount of acid acceptor will generally depend on the nature of the acid acceptor used. Typically, the amount of acid acceptor used is between 0.5 and 5 parts per 100 parts of fluorinated polymer. In one embodiment, zinc oxide is not needed in the curable fluoroelastomer composition of the present disclosure.

The curable fluoroelastomer compositions may be prepared by mixing the fluorinated polymer, a peroxide cure composition and optionally additives in conventional rubber processing equipment to provide a solid mixture, i.e. a solid polymer containing the additional ingredients, also referred to in the art as a "compound". This process of mixing the ingredients to produce such a solid polymer composition containing other ingredients is typically called "compounding". Such equipment includes rubber mills, internal mixers, such as Banbury mixers, and mixing extruders. The temperature of the mixture during mixing typically will not rise above about 120°C. During mixing the components and additives are distributed uniformly throughout the resulting fluorinated polymer "compound" or polymer sheets. The "compound" can then be extruded or pressed in a mold, e.g., a cavity or a transfer mold and subsequently be oven-cured. In an alternative embodiment curing can be done in an autoclave.

Curing is typically achieved by heat-treating the curable fluoroelastomer composition. The heat-treatment is carried out at an effective temperature and effective time to create a cured fluoroelastomer. Optimum conditions can be tested by examining the fluoroelastomer for its mechanical and physical properties. Typically, curing is carried out at temperatures greater than 120°C or greater than 150°C. Typical curing conditions include curing at temperatures between 160°C and 210°C or between 160°C and 190°C. Typical curing periods include from 3 to 90 minutes. Curing is preferably carried out under pressure. For example pressures from 10 to 100 bar may be applied. A post curing cycle may be applied to ensure the curing process is fully completed. Post curing may be carried out at a temperature between 170°C and 250°C for a period of 1 to 24 hours.

The cured fluoroelastomers are particularly useful as seals, gaskets, and molded parts in systems that are exposed to elevated temperatures and/or corrosive materials, such as in automotive, chemical processing, semiconductor, aerospace, and petroleum industry applications, among others. Because the fluoroelastomers may be used in sealing applications, it is important that the elastomers perform well under compression. Compressive sealing is based on the ability of an elastomer to be easily compressed and develop a resultant force that pushes back on the mating surfaces. The ability of a material to maintain this resultant force as a function of time over a range of environmental conditions is important to long term stability. As a result of thermal expansion, stress relaxation, and thermal aging, the initial sealing forces will decay over time. By determining the compression set, elastomeric materials can be evaluated for their sealing force retention under a range of conditions, particularly under high temperature conditions, such as 200°C, 225°C, 232°C, 250°C, and even 275°C.

The fluoroelastomers may be used to prepare shaped articles. Such articles may be prepared by providing a curable fluoroelastomer composition and adding further ingredients such as filler, pigments, plasticizers, lubricants and the like to the curable composition. Typical fillers include, for example, silica containing materials or carbon particles like carbon blacks, graphite, soot and the like. Alternatively, the ingredients may already be added in the compounding step and are introduced into the compound. Shaping the composition into a shaped article may be carried out, for example, by curing the composition in shaped molds or by shaping cured composition by means known in the art, for example by cutting, die cutting, and the like.

Listed in the following are exemplary embodiments for the present disclosure:

Embodiment 1. A composition comprising a fluoropolymer derived from the polymerization of (i) a polymerizable fluorinated olefinic monomer and (ii) a hydrocarbon olefin-containing perfluoro vinyl ether monomer selected from $CF_2=CFO-R_f-CH=CH_2$, wherein $R_f$ is a perfluorinated group, optionally comprising catenated O atoms, with the proviso that the $R_f$ group does not comprise 2 or 3 catenated atoms between the oxygen atom of the vinyl ether group and the vinyl group.

Embodiment 2. The composition of embodiment 1, wherein $R_f$ is substituted, unsubstituted, saturated, linear, or branched, optionally including catenated oxygen atoms.

Embodiment 3. The composition of any one of the previous embodiments, wherein $R_f$ is selected from at least one of: $-CF_2-$ and a perfluorinated alkylene radical comprising 4-10 carbon atoms.

Embodiment 4. The composition of any one of the previous embodiments, wherein the hydrocarbon olefin-containing perfluoro vinyl ether monomers are selected from at least one of: $CF_2=CFOC_4F_8CH=CH_2$, $CF_2=CFOC_5F_{10}CH=CH_2$, $CF_2=CFOCF_2CF(CF_3)OC_2F_4CH=CH_2$, and $CF_2=CFOCF_2CF(CF_3)OC_4F_8CH=CH_2$.

Embodiment 5. The composition of any one of the previous embodiments, wherein the polymerizable fluorinated olefinic monomer is selected from at least one of tetrafluoroethylene; hexafluoropropylene; vinylidene fluoride; vinyl fluoride; and $CH_2=C(R)-Z-C(R)=CH_2$, where R is independently selected from H or a C1-C6 alkyl and Z is a linear or branched C1-C18 fluorinated radical, optionally containing catenated oxygen atoms.

Embodiment 6. The composition of any one of the previous embodiments, wherein the fluoropolymer is further derived from a chain transfer agent.

Embodiment 7. The composition of embodiment 6, wherein the chain transfer agent is selected from at least one of a perfluorinated alkyl monoiodide, perfluorinated alkyl diiodide, perfluorinated alkyl monobromide, and perfluorinated alkyl dibromide.

Embodiment 8. The composition of any one of the previous embodiments, wherein the fluoropolymer is further derived from a cure site monomer.

Embodiment 9. The composition of embodiment 8, wherein the cure site monomer is selected from at least one of $CF_2=CHBr$, $CH_2=CHCH_2Br$, $CF_2=CFCF_2Br$, $CH_2=CHCF_2CF_2Br$, $CF_2=CHI$, $CH_2=CHCH_2I$, $CF_2=CFCF_2I$, $CH_2=CHCF_2CF_2I$, $CF_2=CFOC_4F_8I$, $CF_2=CFOC_2F_4I$, $CF_2=CFOCF_2CF(CF_3)OC_2F_4I$, $CH_2=CHCF_2CF_2I$, $CF_2=CFOCF_2CF_2CH_2I$, $CF_2=CFOCF_2CF_2CH_2CH_2I$, and $CF_2=CFOC_4F_8CH_2CH_2I$.

Embodiment 10. The composition of any one of the previous embodiments, wherein the amount of hydrocarbon olefin-containing perfluoro vinyl ether monomer is 0.01 to 0.1 mole % of the total moles of monomer used.

Embodiment 11. A curable composition comprising the composition according to any one of embodiments 1-10 and a curing agent.

Embodiment 12. The curable composition of embodiment 11, wherein the curing agent is a peroxide, optionally comprising a coagent.

Embodiment 13. The curable composition of embodiment 11, wherein the peroxide is selected from 2,5-dimethyl-2,5-di(t-butylperoxy)-hexane, dicumyl peroxide, di(2-t-butylperoxyisopropyl)benzene, and combinations thereof.

Embodiment 14. The curable composition of any one of embodiments 12-13, wherein the coagent is selected from at least one of triallyl isocyanurate, tri(methyl)allyl isocyanurate, and triallyl cyanurate.

Embodiment 15. The cured article comprising the article comprising the curable composition of any one of embodiments 11-14.

Embodiment 16. The cured article of embodiment 15, wherein the cured article is essentially free of an acid acceptor selected from at least one of a metal oxide and metal hydroxide.

Embodiment 17. A method of making a fluoropolymer comprising: providing a polymerizable fluorinated olefinic monomer and a hydrocarbon olefin-containing perfluoro vinyl ether monomer selected from $CF_2=CFO-R_f-CH=CH_2$, wherein $R_f$ is a fluorinated group with the proviso that the $R_f$ group does not comprise 2 or 3 catenated atoms between the oxygen atom of the vinyl ether group and the vinyl group, and polymerizing the monomers in the presence of an initiator.

Embodiment 18. The method of embodiment 17, wherein the amount of hydrocarbon olefin-containing perfluoro vinyl ether monomer is 0.01 to 0.1 mole % of the total moles of monomer used.

Embodiment 19. The method of any one of embodiments 17-18, wherein $R_f$ is substituted, unsubstituted, saturated, linear, or branched, optionally including catenated oxygen atoms.

Embodiment 20. The method of any one of embodiments 17-19, wherein $R_f$ is selected from at least one of: $-CF_2-$ and a perfluorinated alkylene radical comprising 4-10 carbon atoms.

Embodiment 21. The method of any one of embodiments 17-20, wherein the hydrocarbon olefin-containing perfluoro vinyl ether monomers are selected from at least one of: $CF_2=CFOC_4F_8CH=CH_2$, $CF_2=CFOC_5F_{10}CH=CH_2$, $CF_2=CFOCF_2CF(CF_3)OC_2F_4CH=CH_2$, and $CF_2=CFOCF_2CF(CF_3)OC_4F_8CH=CH_2$.

Embodiment 22. The method of any one of embodiments 17-21, wherein the polymerizable fluorinated olefinic monomer is selected from at least one of tetrafluoroethylene; hexafluoropropylene; vinylidene fluoride; vinyl fluoride; and $CH_2=C(R)-Z-C(R)=CH_2$, where R is independently selected from H or a C1-C6 alkyl and Z is a linear or branched C1-C18 fluorinated radical, optionally containing oxygen atoms.

Embodiment 23. The method of any one of embodiments 17-22, further comprising polymerizing the monomers in the presence of a chain transfer agent.

Embodiment 24. The method of embodiment 23, wherein the chain transfer agent is selected from at least one of a perfluorinated alkyl monoiodide, perfluorinated alkyl diiodide, perfluorinated alkyl monobromide, and perfluorinated alkyl dibromide.

Embodiment 25. The method of any one of embodiments 17-24, further comprising polymerizing the monomers in the presence of a cure site monomer.

Embodiment 26. The method of embodiment 25, wherein the cure site monomer is selected from at least one of $CF_2=CHBr$, $CH_2=CHCH_2Br$, $CF_2=CFCF_2Br$, $CH_2=CHCF_2CF_2Br$, $CF_2=CHI$, $CH_2=CHCH_2I$, $CF_2=CFCF_2I$, $CH_2=CHCF_2CF_2I$, $CF_2=CFOC_4F_8I$, $CF_2=CFOC_2F_4I$, $CF_2=CFOCF_2CF(CF_3)OC_2F_4I$, $CH_2=CHCF_2CF_2I$, $CF_2=CFOCF_2CF_2CH_2I$, $CF_2=CFOCF_2CF_2CH_2CH_2I$, and $CF_2=CFOC_4F_8CH_2CH_2I$ (MV4EI).

Embodiment 27. The method of any one of embodiments 17-24, further comprising polymerizing the monomers in the absence of a cure site monomer.

## EXAMPLES

Advantages and embodiments of this disclosure are further illustrated by the following examples, but the particular materials and amounts thereof recited in these examples, as well as other conditions and details, should not be construed to unduly limit this invention. In these examples, all percentages, proportions and ratios are by weight unless otherwise indicated.

All materials were obtained or are available, from general chemical suppliers such as, for example, Sigma-Aldrich Company, Saint Louis, Missouri, or may be synthesized by conventional methods.

These abbreviations are used in the following examples: phr = parts per hundred rubber; g = grams, min = minutes, mol = mole; mmol = millimole, hr = hour, °C = degrees Celsius, mL = milliliter, L = liter, psi = pounds per square inch, psig = pounds per square inch gauge; MPa = Mega-Pascals, GCMS= gas chromatography mass spectroscopy, FNMR = Fourier transform nuclear magnetic resonance, and N-m = Newton-meter.

MATERIALS TABLE

| | |
|---|---|
| TFE | Tetrafluoroethylene |
| PMVE | Perfluoro(methyl vinyl ether) |
| 1, 4-diiodooctafluorobutane | Commercially available from SynQuest Lab, Florida |
| FLUORINERT FC-70 | Commercially available from 3M Company, St. Paul, MN |
| $CF_3OCF_2CF_2CF_2OCHFCF_2CO_2H$ | Emulsifier, prepared as in "Preparation of Compound 11" in US 7,671,112 |
| Carbon black | N990 carbon black commercially available from Cabot, Boston, MA |
| Coagent | Triallyl-isocyanurate commercially available under the trade designation "TAIC-DLC - 72%" from Natrochem, Inc, SAVANNAH, GA |

(continued)

| TFE | Tetrafluoroethylene |
|---|---|
| Peroxide | Peroxide commercially available under the trade designation "VAROX DBPH-50" from R.T. Vanderbilt Company, Inc., Norwalk, CT |
| ZnO | Commercially available from Sigma-Aldrich Company, Saint Louis, Missouri |

Methods

MOONEY VISCOSITY

The Mooney viscosity values were measured in a similar manner as described in ASTM D 1646-06 Type A by a MV2000 instrument (available from Alpha Technologies, Ohio) using large rotor (ML 1+10) at 121°C. Results are reported in Mooney units.

CURE RHEOLOGY

Cure rheology tests were carried out using uncured, compounded samples using a rheometer marketed under the trade designation Monsanto Moving Die Rheometer (MDR) Model 2000 by Monsanto Company, Saint Louis, Missouri, in accordance with ASTM D 5289-93a at 177 °C, no pre-heat, 30 minute elapsed time, and a 0.5 degree arc. Both the minimum torque ($M_L$) and highest torque attained during a specified period of time when no plateau or maximum torque ($M_H$) was obtained were measured. Also measured were the time for the torque to increase 2 units above $M_L$ ($t_S2$), the time for the torque to reach a value equal to $M_L + 0.5(M_H - M_L)$, (t'50), and the time for the torque to reach $M_L + 0.9(M_H - M_L)$, (t'90) as well as the tan(delta) at $M_L$ and $M_H$. Tan(delta) is equal to the ratio of the tensile loss modulus to the tensile storage modulus (lower tan(delta) means more elastic). Results are reported in Table 1.

O-RING MOLDING AND COMPRESSION SET

O-rings having a cross-section thickness of 0.139 inch (3.5 mm) were molded (10 min cure at 177 °C) followed by a postcure in air for 8 hrs at 200°C. The O-rings were subjected to compression set testing following a similar method as described in ASTM 395-89 method B (analyzed in triplicate), with 25 % initial deflection at variable time and temperature as per Tables 2 and 3.

PREPARATION OF MV4I $CF_2=CFOC_4F_8I$

To a 5-liter 3-neck round bottom flask equipped with a mechanical stirrer, condenser, addition funnel and a thermocouple was charged 151g (3.9mol) $NaBH_4$ and 1250g isopropanol with stirring at 15°C. Addition of 750g (1.97mol) $CF_2=CFOC_4F_8SO_2F$ made as described in Example section A to C of U.S. Pat. No.6,624,328 (Guerra) was done over five hours at 35°C and allowed to stir for one hour. Addition at 25°C of 600g (2.0mol) 33% $H_2SO_4$ was followed with 520g NaCl dissolved in 1250g water to isolate the product top phase. A second extraction of the product top phase was done by adding 310g NaCl dissolved in 750g water to isolate the product top phase. Solvent removed by rotary evaporation gave 1867g $CF_2=CFOC_4F_8SO_2H$ reduced aqueous product solution. To a 5-liter 3-neck round bottom flask equipped with a mechanical stirrer, condenser and a thermocouple was charged 377g (1.48mol) iodine and 352g (1.48mol) $Na_2S_2O_8$ along with 400g acetonitrile and 600g water and stirred at 50°C. Addition of 1867g $CF_2=CFOC_4F_8SO_2H$ reduced aqueous product solution was done over two hours. The reaction was allowed to heat up to 72°C for 16 hours. The reaction was cooled to 25°C and 20g of $NaHSO_3$ in 100g water was added to decolorize the solution. After phase splitting the lower product phase was washed with 300g distilled water and distilled to give 558g MV4I, $CF_2=CFOC_4F_8I$ confirmed by FNMR and GCMS.

PREPARATION OF MV4EI $CF_2=CFOC_4F_8CH_2CH_2I$

Ethylene addition to MV4I described above was done by vacuum charging 200g (0.47mol) $CF_2-CFOC_4F_8I$ MV4I with 3g (0.01mol) t-butyl-2-ethyl hexanoate peroxide into a 600ml Parr reactor. The reactor was heated to 65°C and 14g (0.5mol) of ethylene was added over one hour at 18 psi (124 kPa) reactor pressure. The reactor was cooled to 25°C and 214g was drained. Vacuum distillation gave 192g boiling at 105°C/46mm as 72% $CF_2=CFOC_4F_8CH_2CH_2I$ MV4EI and 18.8% cyclic $ICH_2CH_2CF_2-(CFOC_4F_8)$ as determined by $^{19}$FNMR.

PREPARATION OF MV4E

Chlorination of $CF_2=CFOC_4F_8SO_2F$ to $ClCF_2CFClOC_4F_8SO_2F$ : To a 1-liter 3-neck round bottom flask equipped with a mechanical stirrer, condenser and a thermocouple was charge 1000g (2.63mol) $CF_2=CFOC_4F_8SO_2F$ (MV4S) prepared as described in US6,624,328 and 187g (2.64mol) of chlorine was bubbled in. Reaction was allowed to heat up to 50°C over the two hour addition. The reaction temperature dropped to 25°C after addition and the product was distilled over at 88°C/60mm Hg to obtain 1176g (2.61mol) for a 99.1% yield.

Reduction of $ClCF_2CFClOC_4F_8SO_2F$ to $ClCF_2CFClOC_4F_8SO_2H$ and iodination to $ClCF_2CFClOC_4F_8I$ : To a 5-liter 3-neck round bottom flask equipped with a mechanical stirrer, condenser, addition funnel and a thermocouple was charge 180g (4.7mol) $NaBH_4$ in 1500g tetrahydrofuran and stirred. Addition of 1176g (2.61mol) $ClCF_2CFClOC_4F_8SO_2F$ was done over four hours at 50°C and allowed to react for one hour at 65°C. Addition at room temperature of 900g (3.0mol) 33% $H_2SO_4$ and the mixture was filtered to remove solids. The solution was phase split with the top phase containing the product and solvent rotary evaporated. Additional water added to remove most of the tetrahydrofuran. To the 1155g of concentrated reduced product was diluted by addition of 1128g water. Iodination was done in two equal batches. The first batch was done by addition of half of the reduced solution to a 5-liter 3-neck round bottom flask equipped with a mechanical stirrer, condenser and a thermocouple having 371g (1.46mol) iodine and 347g (1.46mol) $Na_2S_2O_8$ along with 500g acetonitrile and 750g water. The reaction was allowed to heat up to 72°C over the one hour addition and held for one hour at this temperature. The reaction was cooled to 25°C and 100g of $NaHSO_3$ in 500g water was added to decolorize the solution. After phase splitting the lower product phase was washed with 300g of water. The second batch was similarly reacted. The combined product was distilled at 94°C/58 mm Hg to give 1008g (2.04mol) for a 78% yield over the reduction and iodination steps.

Ethylene addition of $ClCF_2CFClOC_4F_8I$ to $ClCF_2CFClOC_4F_8CH_2CH_2I$: Ethylene addition was done in two equal batches. The first batch was done by vacuum charging 502g (1.01mol) $ClCF_2CFClOC_4F_8I$ with 6.6g (0.03mol) t-butyl-2-ethyl hexanoate peroxide (available from United Initiators of Elyria, OH as TBPEH) into a 600ml Parr reactor. The reactor was heated to 65°C and 28.8g (1.02mol) of ethylene was added over two hours at 18psi (124 kPa) reactor pressure. The reactor was cooled to 25°C and 530g (1.01mol) was drained. The second batch was similarly reacted. The combined product gave 1054g (2.02mol) for a 99% yield.

Dehydroiodination with sodium methoxide of $ClCF_2CFClOC_4F_8CH_2CH_2I$ to $ClCF_2CFClOC_4F_8CH=CH_2$: In a 5-liter 3-neck round bottom flask equipped with a mechanical stirrer, condenser, addition funnel and a thermocouple were charged 1054g (2.02mol) $ClCF_2CFClOC_4F_8CH_2CH_2I$ in 1000g methanol and stirred. A 25 weight percent sodium methoxide 490g (2.26mol) was added over one hour with a temperature rise up to 32°C. The mixture was heated for one hour at 65°C. After the reaction was cooled to 25°C 1500g water was added to cause a phase split. The bottom product was heated under vacuum to remove residual methanol and water to give 762g (1.93mol) $ClCF_2CFClOC_4F_8CH=CH_2$ for a 96% yield.

Dechlorination with zinc of $ClCF_2CFClOC_4F_8CH=CH_2$ to $CF_2=CFOC_4F_8CH=CH_2$: In a 5-liter 3-neck round bottom flask equipped with a mechanical stirrer, condenser, addition funnel and a thermocouple were charged 250g (3.85mol) zinc powder and 950g dimethylformamide and 30g bromine. Addition of 762g (1.93mol) ClCF2CFClOC4F8CH=CH2 was done over two hours keeping the temperature under 75°C. After addition the pot was heated to 122°C to distill product to a receiver and heating was continued until the pot temperature reached 152°C. The fluorochemical product was washed with 200g water and distilled to obtain 556g (1.75mol) $CF_2=CFOC_4F_8CH=CH2$ (MV4E) having a boiling point of 114°C and 98% purity by F and HNMR with 1.4% $CF_2=CFOC_4F_8H$ for a 89% yield.

The 6 step process gave a 65% overall yield starting with 1000g (2.63mol) MV4S and obtaining 556g (1.72mol) MV4E.

PREPARATION OF MICROEMULSION A

To a 1000-mL, three-neck round bottom flask equipped with a nitrogen inlet and outlet and an IKA UltraTurrax mixer was charged 17 g (40 mmol) of MV4I ($CF_2=CFOCF_2CF_2CF_2I$), 13 g (40 mmol) of MV4E ($CF_2=CFOCF_2CF_2CF_2CH=CH_2$), 64 g (142 mmol) of DIOFB, 6 g of a 30% aqueous solution of $CF_3OCF_2CF_2CF_2OCHFCF_2CO_2H$ "spiked" with 1.5% by weight of "FLUORINERT FC-70" and 110 g of deionized water. The resulting mixture was stirred at the maximum setting (23,800 rpm) on the mixer for 5 minutes under a nitrogen atmosphere. The mixture formed an opaque microemulsion stable at room temperature for several hours. This microemulsion was used in the preparation of the perfluoroelastomers.

PREPARATION OF MICROEMULSION B

Microemulsion B was prepared identically to Microemulsion A except that 35 g of MV4I and 100 g water was used.

PREPARATION OF MICROEMULSION C

Microemulsion C was prepared identically to Microemulsion A except that no MV4I was used and 135 g water was used.

PREPARATION OF MICROEMULSION D

To a 1000-mL, three-neck round bottom flask equipped with a nitrogen inlet and outlet and an IKA UltraTurrax mixer was charged 50 g (154 mmol) of MV4E ($CF_2=CFOCF_2CF_2CF_2CF_2CH=CH_2$) and 6 g of a 30% aqueous solution of $CF_3OCF_2CF_2CF_2OCHFCF_2CO_2H$ "spiked" with 1.5% by weight of "FLUORINERT FC-70" and 300 g of deionized water. The resulting mixture was stirred at the maximum setting (23,800 rpm) on the mixer for 5 minutes under a nitrogen atmosphere.

PREPARATION OF MICROEMULSION E

Microemulsion E was prepared identically to Microemulsion D except that 60 g of DIOFB was used.

PREPARATION OF MICROEMULSION F

Microemulsion F was prepared identically to Microemulsion D except that 60 g of DIOFB and 25 g of MV4E was used.

PREPARATION OF MICROEMULSION G

Microemulsion G was prepared identically to Microemulsion A except that 32 g of MV4I and 300 g of water were used and no MV4E was used

PREPARATION OF MICROEMULSION H

Microemulsion H was prepared identically to Microemulsion G except that 25 g of MV4E and 90 g of DIOFB were used.

PREPARATION OF MICROEMULSION I

To a 1000-mL, three-neck round bottom flask equipped with a nitrogen inlet and outlet and an IKA UltraTurrax mixer was charged 35 g (82 mmol) of MV4I ($CF_2=CFOCF_2CF_2CF_2CF_2I$), 13 g (40 mmol) of MV4E ($CF_2=CFOCF_2CF_2CF_2CF_2CH=CH_2$), 48 g (106 mmol) of DIOFB, 6 g of a 30% aqueous solution of $CF_3OCF_2CF_2CF_2OCHFCF_2CO_2H$ "spiked" with 1.5% by weight of "FLUORINERT FC-70" and 113 g of deionized water. The resulting mixture was stirred at the maximum setting (23,800 rpm) on the mixer for 5 minutes under a nitrogen atmosphere.

PREPARATION OF MICROEMULSION J

Microemulsion J was prepared identically to Microemulsion D except that 13 g of MV4E, 64 g of DIOFB, and 135 g of water were used.

PREPARATION OF MICROEMULSION K

Microemulsion K was prepared identically to Microemulsion D except that 34 g of MV4EI, 13 g of MV4E, 32g of DIOFB, and 125 g of water were used.

GENERAL PREPARATION OF PERFLUOROELASTOMER

A 4-liter reactor was charged with 2450 g deionized water, heated to 72°C and inerted by performing a series of three vacuum pulls and vacuum breaks with nitrogen. Using the vacuum on the reactor from the third vacuum pull, the reactor was charged with 58 g of a 30% aqueous solution of $CF_3OCF_2CF_2CF_2OCHFCF_2CO_2H$ "spiked" with 1.5% by weight of "FLUORINERT FC-70", a variable amount of ammonium persulfate (APS) (as indicated in Table 1), and 4.26 g of 28% ammonium hydroxide. The resulting mixture was stirred at 650 rpm and the vacuum was broken with 25 g of perfluoromethylvinylether (PMVE). The reactor pressure was then raised to 190 psig (1.31 MPa) with a 3:1 mixture of PMVE and tetrafluoroethylene (TFE). Then 680 g of PMVE, 675 g of TFE, and a variable amount of the Microemulsion (as indicated in Table 1) were added to the reaction at such a rate as to maintain the 190 psig (1.31 MPa) reaction pressure (see Table 1 for actual run times). When the addition was complete, the agitator was slowed to 150 rpm, the batch was cooled to 38°C, and the excess pressure was vented. The resulting latex had a solid content of 34% and a pH of 2.90. The polymer latex was coagulated. by adding it to a stirred salt solution of 3000 grams of distilled water and 37.5 grams of $MgCl_2 \cdot 6H_2O$. When all of the latex has been added, the mixture was stirred for an additional 10 minutes. The water/gum slurry was then filtered through cheesecloth and the collected gum was rinsed with deionized water. This washing procedure was repeated for a total of four washes. The gum was then dried in an air circulating oven @ 130°C for 16 hrs.

Examples 1-12 (EX 1-EX 12) and Comparative Example A (CEA)

Polymers were made as described under the "GENERAL PREPARATION OF PERFLUOROELASTOMER" method using the Microemulsions and amounts as detailed in Table 1. Also shown in Table 1 is the polymerization time for each of the Samples and the resulting solids content of the dispersion.

TABLE 1

| Sample | MicroEmulsion (id and g) | MV4E (g) | MV4I (g) | DIOFB (g) | APS (g) | Run time (or addition time for Microemulsion) (hr) | Polymerization Time (min) | % Solids |
|--------|--------------------------|----------|----------|-----------|---------|----------------------------------------------------|---------------------------|----------|
| EX1 | D, 14 | 2.0 | NONE | NONE | 5.2 | 5.8 | 350 | 29.2 |
| EX2 | E, 16 | 2.0 | NONE | 2.4 | 5.2 | 3.3 | 200 | 32.8 |
| EX3 | E, 32 | 4.0 | NONE | 5.0 | 4.8 | 4.4 | 267 | 34.4 |
| EX4 | F, 32 | 2.0 | NONE | 4.8 | 5.2 | 6.8 | 409 | 37.4 |
| CEA | G, 32 | NONE | 2.6 | 4.8 | 5.2 | 4.7 | 284 | 36.5 |
| EX5 | H, 32 | 2.0 | 2.6 | 7.2 | 5.2 | 4.3 | 257 | 34.0 |
| EX6 | I, 32 | 2.0 | 5.2 | 7.2 | 5.2 | 6.9 | 415 | 29.7 |
| EX7 | A, 32 | 2.0 | 2.6 | 9.6 | 5.2 | 5.0 | 300 | 36.8 |
| EX8 | B, 32 | 2.0 | 5.2 | 9.6 | 5.2 | 4.4 | 264 | 34.7 |
| EX9 | C, 32 | 2.0 | NONE | 9.6 | 2.6 | 7.7 | 464 | 34.8 |
| EX10 | B, 32 | 2.0 | 5.2 | 9.6 | 2.6 | 7.3 | 440 | 24.3 |
| EX11 | J, 32 | 2.0 | NONE | 9.6 | 5.2 | 5.3 | 316 | 21.0 |
| EX12 | K, 32 | 2.0 | 5.2*** | 4.9 | 5.2 | 4.9 | 292 | 34.8 |
| ***MV4EI used in place of MV4I<br>Note: For EX1, 2.4 g of DIOFB was not added in the microemulsion, but rather as a blend with the PMVE. | | | | | | | | |

The resulting polymers from Examples 1-12 and Comparative Example A were tested as following the "MOONEY VISCOSITY" method described above and reported as (ML 1+10) at 121°C. The resulting polymers were also tested for content of iodine using neutron activation analysis and reported as the wt. % iodide in the fluoropolymer. The results are shown in Table 2.

TABLE 2

| Sample | wt. % Iodide | Mooney Viscosity Mooney units (MU) |
|--------|--------------|------------------------------------|
| EX1 | 0.120 | 82 |
| EX2 | 0.660 | >200 |
| EX3 | 0.096 | >200 |

(continued)

| Sample | wt. % Iodide | Mooney Viscosity Mooney units (MU) |
|---|---|---|
| EX4 | 0.014 | 135 |
| CEA | 0.680 | 139 |
| EX5 | 0.079 | 114 |
| EX6 | 0.310 | 59 |
| EX7 | 0.390 | 37 |
| EX8 | 0.740 | 26 |
| EX9 | 0.802 | 13 |
| EX10 | 0.634 | 28 |
| EX11 | 0.566 | <2 |
| EX12 | 0.237 | 56 |

Each of the polymer gums described in Table 1 above, were individually compounded on a two-roll mill as follows: 100 parts of the polymer gum, 20 parts carbon black, 2.5 parts coagent, 2.5 parts peroxide, and if indicated, 5 parts ZnO. The compounded polymers were tested as per "CURE RHEOLOGY" and "O-RING MOLDING AND COMPRESSION SET" as described above and the results are reported in Tables 3 and 4.

TABLE 3

|  | EX1† | EX1 | EX2† | EX2 | EX3† | EX3 |
|---|---|---|---|---|---|---|
| MDR (10 min @ 177°C) | | | | | | |
| $M_L$, in-lb (N-m) | 1.8 | 1.5 | 6.7 | 5.9 | 5.2 | 4.7 |
| $M_H$, in-lb (N-m) | 10.4 | 10.2 | 19.1 | 18.5 | 17.8 | 17.2 |
| $t_S2$, min | 0.3 | 0.4 | 0.4 | 0.4 | 0.5 | 0.5 |
| t'50, min | 0.4 | 0.4 | 0.5 | 0.7 | 0.8 | 0.7 |
| t'90, min | 0.8 | 1.3 | 1.4 | 2.2 | 2.8 | 2.2 |
| Tan(delta) @ $M_L$ | 11.0 | 1.1 | 0.5 | 0.6 | 0.6 | 0.6 |
| Tan(delta) @ $M_H$ | 0.35 | 0.35 | 0.18 | 0.17 | 0.18 | 0.18 |
|  | | | | | | |
| Compression set % (70 hrs @ 200°C). 4 hr postcure 232°C | 85 | NM | NM | NM | 57 | 51 |
| Compression set % (70 hrs @ 232°C). 4 hr postcure 232°C | 89 | 94 | 68 | 72 | 68 | 67 |
| NM= not measured; † ZnO used | | | | | | |

TABLE 4

|  | EX4 | CEA | EX5 | EX6 | EX7 | EX8 | EX9 | EX10 | EX11 | EX12 |
|---|---|---|---|---|---|---|---|---|---|---|
| MDR (10 min @ 177°C) | | | | | | | | | | |
| $M_L$, in-lb (N-m) | 2.1 | 3.5 | 3.8 | 1.4 | 0.8 | 0.6 | 0.3 | 0.6 | 0.0 | 1.1 |

(continued)

| | EX4 | CEA | EX5 | EX6 | EX7 | EX8 | EX9 | EX10 | EX11 | EX12 |
|---|---|---|---|---|---|---|---|---|---|---|
| MDR (10 min @ 177°C) | | | | | | | | | | |
| $M_H$, in-lb (N-m) | 6.1 | 10.8 | 14.3 | 15.6 | 17.9 | 22.8 | 21.1 | 15.9 | 16.4 | 22.0 |
| $t_S2$, min | 0.8 | 0.6 | 0.4 | 0.4 | 0.3 | 0.3 | 0.3 | 0.4 | 0.3 | 0.3 |
| t'50, min | 0.8 | 0.8 | 0.5 | 0.5 | 0.4 | 0.4 | 0.4 | 0.5 | 0.4 | 0.5 |
| t'90, min | 2.0 | 2.3 | 1.2 | 1.9 | 1.0 | 0.8 | 0.8 | 0.8 | 0.6 | 1.0 |
| Tan(delta) @ $M_L$ | 1.0 | 0.8 | 0.7 | 0.9 | 1.1 | 1.1 | 1.3 | 1.1 | 10.0 | 1.3 |
| Tan(delta) @ $M_H$ | 0.63 | 0.43 | 0.27 | 0.20 | 0.10 | 0.08 | 0.10 | 0.15 | 0.12 | 0.13 |
| | | | | | | | | | | |
| Compression set % (70 hrs @ 200°C). 4 hr postcure 232°C | 98 | 105 | 79 | 56 | 42 | 38 | 32 | 48 | NM | NM |
| Compression set % (70 hrs @ 232°C). 4 hr postcure 232°C | NM | 111 | 100 | 69 | 63 | 64 | 72 | 77 | NM | NM |
| Compression set % (70 hrs @ 200°C). 8 hr postcure 200°C | NM | NM | NM | NM | NM | 35 | 32 | NM | 27 | 40 |
| Compression set % (70 hrs @ 232°C). 8 hr postcure 200°C | NM | NM | NM | NM | NM | 68 | 74 | NM | 73 | 71 |
| NM = not measured | | | | | | | | | | |

## Claims

1. A composition comprising a fluoropolymer derived from the polymerization of (i) a polymerizable fluorinated olefinic monomer and (ii) a hydrocarbon olefin-containing perfluoro vinyl ether monomer selected from $CF_2=CFO-R_f-CH=CH_2$, wherein $R_f$ is a perfluorinated group, optionally comprising catenated O atoms, with the proviso that the $R_f$ group does not comprise 2 or 3 catenated atoms between the oxygen atom of the vinyl ether group and the vinyl group.

2. The composition of claim 1, wherein $R_f$ is substituted, unsubstituted, saturated, linear, or branched, optionally including catenated oxygen atoms.

3. The composition of any one of the previous claims, wherein $R_f$ is selected from at least one of: - $CF_2$- and a perfluorinated alkylene radical comprising 4-10 carbon atoms.

4. The composition of any one of the previous claims, wherein the hydrocarbon olefin-containing perfluoro vinyl ether monomers are selected from at least one of: $CF_2=CFOC_4F_8CH=CH_2$, $CF_2=CFOC_5F_{10}CH=CH_2$, $CF_2=CFOCF_2CF(CF_3)OC_2F_4CH=CH_2$, and $CF_2=CFOCF_2CF(CF_3)OC_4F_8CH=CH_2$.

5. The composition of any one of the previous claims, wherein the polymerizable fluorinated olefinic monomer is selected from at least one of tetrafluoroethylene; hexafluoropropylene; vinylidene fluoride; vinyl fluoride; and $CH_2=C(R)-Z-C(R)=CH_2$, where R is independently selected from H or a C1-C6 alkyl and Z is a linear or branched C1-C18 fluorinated radical, optionally containing catenated oxygen atoms.

6. The composition of any one of the previous claims, wherein the amount of hydrocarbon olefin-containing perfluoro vinyl ether monomer is 0.01 to 0.1 mole % of the total moles of monomer used.

7. The composition of any one of claims 1-6 wherein the fluoropolymer is further derived from a chain transfer agent selected from at least one of a perfluorinated alkyl monoiodide, perfluorinated alkyl diiodide, perfluorinated alkyl monobromide, and perfluorinated alkyl dibromide.

8. The composition of any one of claims 1-7, wherein the fluoropolymer is further derived from a cure site monomer selected from at least one of $CF_2=CHBr$, $CH_2=CHCH_2Br$, $CF_2=CFCF_2Br$, $CH_2=CHCF_2CF_2Br$, $CF_2=CHI$, $CH_2=CHCH_2I$, $CF_2=CFCF_2I$, $CH_2=CHCF_2CF_2I$, $CF_2=CFOC_4F_8I$, $CF_2=CFOC_2F_4I$, $CF_2=CFOCF_2CF(CF_3)OC_2F_4I$, $CH_2=CHCF_2CF_2I$, $CF_2=CFOCF_2CF_2CH_2I$, $CF_2=CFOCF_2CF_2CH_2CH_2I$, and $CF_2=CFOC_4F_8CH_2CH_2I$.

9. A curable composition comprising the composition according to any one of claims 1-8 and a curing agent.

10. The curable composition of claim 9, wherein the curing agent is a peroxide, optionally comprising a coagent.

11. A cured article obtained from the curable composition of claim 9.

12. The cured article of claim 11, wherein the cured article is essentially free of an acid acceptor selected from at least one of a metal oxide and a metal hydroxide.

13. A method of making a fluoropolymer comprising: providing a polymerizable fluorinated olefinic monomer and a hydrocarbon olefin-containing perfluoro vinyl ether monomer selected from $CF_2=CFO-R_fCH=CH_2$, wherein $R_f$ is a fluorinated group with the proviso that the $R_f$ group does not comprise 2 or 3 catenated atoms between the oxygen atom of the vinyl ether group and the vinyl group, and polymerizing the monomers in the presence of an initiator.

14. The method of claim 13, wherein the amount of hydrocarbon olefin-containing perfluoro vinyl ether monomer is 0.01 to 0.1 mole % of the total moles of monomer used.

15. The method of any one of claims 13-14 further comprising polymerizing the monomers in the absence of a cure site monomer.

**Patentansprüche**

1. Zusammensetzung, umfassend ein Fluorpolymer, das sich ableitet aus der Polymerisation von (i) einem polymerisierbaren fluorierten Olefinmonomer und (ii) einem Kohlenwasserstoffolefin-enthaltenden Perfluorvinylethermonomer ausgewählt aus $CF_2=CFO-R_f-CH=CH_2$, wobei $R_f$ für eine perfluorierte Gruppe steht, die wahlweise verknüpfte O-Atome umfasst, mit der Maßgabe, dass die $R_f$-Gruppe nicht 2 oder 3 verknüpfte Atome zwischen dem Sauerstoffatom der Vinylethergruppe und der Vinylgruppe umfasst.

2. Zusammensetzung nach Anspruch 1, wobei $R_f$ substituiert, unsubstituiert, gesättigt, linear oder verzweigt ist, wahlweise umfassend verknüpfte Sauerstoffatome.

3. Zusammensetzung nach einem der vorstehenden Ansprüche, wobei $R_f$ ausgewählt ist aus mindestens einem von Folgendem: - $CF_2$- und einem perfluorierten Alkylenrest, umfassend 4-10 Kohlenstoffatome.

4. Zusammensetzung nach einem der vorstehenden Ansprüche, wobei die Kohlenwasserstoffolefin-enthaltenden Perfluorvinylethermonomere ausgewählt sind aus mindestens einem von Folgendem: $CF_2=CFOC_4F_8CH=CH_2$, $CF_2=CFOC_5F_{10}CH=CH_2$, $CF_2=CFOCF_2CF(CF_3)OC_2F_4CH=CH_2$, und $CF_2=CFOCF_2CF(CF_3)OC_4F_8CH=CH_2$.

5. Zusammensetzung nach einem der vorstehenden Ansprüche, wobei das polymerisierbare, fluorierte Olefinmonomer ausgewählt ist aus mindestens einem von Tetrafluorethylen; Hexafluorpropylen; Vinylidenfluorid; Vinylfluorid; und $CH_2=C(R)-Z-C(R)=CH_2$, wobei R unabhängig ausgewählt ist aus H oder einem C1-C6-Alkyl und Z für einen linearen oder verzweigten fluorierten C1-C18-Rest steht, wahlweise enthaltend verknüpfte Sauerstoffatome.

6. Zusammensetzung nach einem der vorstehenden Ansprüche, wobei die Menge an Kohlenwasserstoffolefin enthaltendem Perfluorvinylethermonomer 0,01 bis 0,1 Mol-% des Gesamtmolgehalts des verwendeten Monomers beträgt.

7. Zusammensetzung nach einem der Ansprüche 1 bis 6, wobei sich das Fluorpolymer ferner von einem Kettenübertragungsmittel ableitet, das ausgewählt ist aus mindestens einem von einem perfluorierten Alkylmonoiodid, perfluorierten Alkyldiiodid, perfluorierten Alkylmonobromid und perfluorierten Alkyldibromid.

8. Zusammensetzung nach einem der Ansprüche 1 bis 7, wobei sich das Fluorpolymer ferner von einem Härtungsstellenmonomer ableitet, das ausgewählt ist aus mindestens einem von $CF_2$=CHBr, $CH_2$=CHCH$_2$Br, $CF_2$=CFCF$_2$Br, $CH_2$=CHCF$_2$CF$_2$Br, $CF_2$=CHI, $CH_2$=CHCH$_2$I, $CF_2$=CFCF$_2$I, $CH_2$=CHCF$_2$CF$_2$I, $CF_2$=CFOC$_4$F$_8$I, $CF_2$=CFOC$_2$F$_4$I, $CF_2$=CFOCF$_2$CF(CF$_3$)OC$_2$F$_4$I, $CH_2$=CHCF$_2$CF$_2$I, $CF_2$=CFOCF$_2$CF$_2$CH$_2$I, $CF_2$=CFOCF$_2$CF$_2$CH$_2$CH$_2$I und $CF_2$=CFOC$_4$F$_8$CH$_2$CH$_2$I.

9. Härtbare Zusammensetzung, umfassend die Zusammensetzung nach einem der Ansprüche 1 bis 8 und ein Härtungsmittel.

10. Härtbare Zusammensetzung nach Anspruch 9, wobei das Härtungsmittel ein Peroxid ist, wahlweise umfassend ein Coagens.

11. Gehärteter Gegenstand, der aus der härtbaren Zusammensetzung nach Anspruch 9 erhalten wird.

12. Gehärteter Gegenstand nach Anspruch 11, wobei der gehärtete Gegenstand im Wesentlichen frei von einem Säurereakzeptor ist, der ausgewählt ist aus mindestens einem von einem Metalloxid und einem Metallhydroxid.

13. Verfahren zur Herstellung eines Fluorpolymers umfassend: Bereitstellen eines polymerisierbaren, fluorierten Olefinmonomers und eines Kohlenwasserstoffolefin enthaltenden Perfluorvinylethermonomers, ausgewählt aus $CF_2$=CFO-R$_f$CH=CH$_2$, wobei R$_f$ eine fluorierte Gruppe ist, mit der Maßgabe, dass die R$_f$-Gruppe nicht 2 oder 3 verknüpfte Atome zwischen dem Sauerstoffatom der Vinylethergruppe und der Vinylgruppe umfasst, und Polymerisieren der Monomere in Gegenwart eines Starters.

14. Verfahren nach Anspruch 13, wobei die Menge an Kohlenwasserstoffolefin enthaltendem Perfluorvinylethermonomer 0,01 bis 0,1 Mol-% des Gesamtmolgehalts an verwendetem Monomer beträgt.

15. Verfahren nach einem der Ansprüche 13 bis 14, ferner umfassend das Polymerisieren der Monomere in Abwesenheit eines Härtungsstellenmonomers.

**Revendications**

1. Composition comprenant un fluoropolymère dérivé de la polymérisation de (i) un monomère oléfinique fluoré polymérisable et (ii) un monomère éther perfluorovinylique contenant une oléfine hydrocarbonée, choisi parmi $CF_2$=CFO-R$_f$-CH=CH$_2$, dans laquelle R$_f$ est un groupe perfluoré, comprenant facultativement des atomes O caténaires, à condition que le groupe R$_f$ ne comprenne pas 2 ou 3 atomes caténaires entre l'atome d'oxygène du groupe éther vinylique et le groupe vinyle.

2. Composition selon la revendication 1, dans laquelle R$_f$ est substitué, non substitué, saturé, linéaire ou ramifié, incluant facultativement des atomes d'oxygène caténaires.

3. Composition selon l'une quelconque des revendications précédentes, dans laquelle R$_f$ est choisi parmi au moins l'un parmi : - $CF_2$- et un radical alkylène perfluoré comprenant 4 à 10 atomes de carbone.

4. Composition selon l'une quelconque des revendications précédentes, dans laquelle les monomères éther perfluorovinylique contenant une oléfine hydrocarbonée sont choisis parmi au moins l'un parmi : $CF_2$=CFOC$_4$F$_8$CH=CH$_2$, $CF_2$=CFOC$_5$F$_{10}$CH=CH$_2$, $CF_2$=CFOCF$_2$CF(CF$_3$)OC$_2$F$_4$CH=CH$_2$ et $CF_2$=CFOCF$_2$CF(CF$_3$)OC$_4$F$_8$CH=CH$_2$.

5. Composition selon l'une quelconque des revendications précédentes, dans laquelle le monomère oléfinique fluoré polymérisable est choisi parmi au moins l'un parmi le tétrafluoroéthylène ; l'hexafluoropropylène ; le fluorure de vinylidène ; le fluorure de vinyle ; et $CH_2$=C(R)-Z-C(R)=CH$_2$, où R est indépendamment choisi parmi H ou un alkyle en C1 à C6 et Z est un radical fluoré linéaire ou ramifié en C1 à C18, contenant facultativement des atomes d'oxygène caténaires.

**6.** Composition selon l'une quelconque des revendications précédentes, dans laquelle la quantité de monomère éther perfluorovinylique contenant une oléfine hydrocarbonée va de 0,01 à 0,1 % molaires du nombre total de moles de monomère utilisé.

**7.** Composition selon l'une quelconque des revendications 1 à 6, dans laquelle le fluoropolymère est en outre dérivé d'un agent de transfert de chaîne choisi parmi au moins l'un parmi un mono-iodure d'alkyle perfluoré, un diiodure d'alkyle perfluoré, un monobromure d'alkyle perfluoré et un dibromure d'alkyle perfluoré.

**8.** Composition selon l'une quelconque des revendications 1 à 7, dans laquelle le fluoropolymère est en outre dérivé d'un monomère à site de durcissement choisi parmi au moins l'un parmi $CF_2=CHBr$, $CH_2=CHCH_2Br$, $CF_2=CFCF_2Br$, $CH_2=CHCF_2CF_2Br$, $CF_2=CHI$, $CH_2=CHCH_2I$, $CF_2=CFCF_2I$, $CH_2=CHCF_2CF_2I$, $CF_2=CFOC_4F_8I$, $CF_2=CFOC_2F_4I$, $CF_2=CFOCF_2CF(CF_3)OC_2F_4I$, $CH_2=CHCF_2CF_2I$, $CF_2=CFOCF_2CF_2CH_2I$, $CF_2=CFOCF_2CF_2CH_2CH_2I$ et $CF_2=CFOC_4F_8CH_2CH_2I$.

**9.** Composition durcissable comprenant la composition selon l'une quelconque des revendications 1 à 8 et un agent de durcissement.

**10.** Composition durcissable selon la revendication 9, dans laquelle l'agent de durcissement est un peroxyde, comprenant facultativement un co-agent.

**11.** Article durci obtenu à partir de la composition durcissable selon la revendication 9.

**12.** Article durci selon la revendication 11, où l'article durci est pratiquement exempt d'un accepteur d'acide choisi parmi au moins l'un parmi un oxyde métallique et un hydroxyde métallique.

**13.** Procédé de préparation d'un fluoropolymère comprenant : la fourniture d'un monomère oléfinique fluoré polymérisable et d'un monomère éther perfluorovinylique contenant une oléfine hydrocarbonée, choisi parmi $CF_2=CFO-R_fCH=CH_2$, dans lequel $R_f$ est un groupe fluoré à condition que le groupe $R_f$ ne comprenne pas 2 ou 3 atomes caténaires entre l'atome d'oxygène du groupe éther vinylique et le groupe vinyle, et la polymérisation des monomères en présence d'un inducteur.

**14.** Procédé selon la revendication 13, dans lequel la quantité de monomère éther perfluorovinylique contenant une oléfine hydrocarbonée va de 0,01 à 0,1 % molaires du nombre total de moles de monomère utilisé.

**15.** Procédé selon l'une quelconque des revendications 13 à 14, comprenant en outre la polymérisation des monomères en l'absence d'un monomère à site de durcissement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4910276 A, Nakamura
- US 20070015937 A, Hintzer
- US 7671112 B
- US 6624328 B, Guerra

**Non-patent literature cited in the description**

- **R. N. SHROFF ; H. MAVRIDIS.** *Macromol.,* 1999, vol. 32, 8464-8464
- *MACROMOL.,* 2001, vol. 34, 7362-7367